# EUROPEAN PATENT SPECIFICATION

(11) **EP 0 694 261 B1**
(45) Date of publication and mention of the grant of the patent: **11.04.2001**
(21) Application number: 94202176.7
(22) Date of filing: 25.07.1994
(51) Int. Cl.: A23L 1/164

(54) **Process and apparatus for manufacturing food clusters, in particular cereal clusters**
Verfahren und Vorrichtung zur Herstellung von Lebensmittelagglomeraten, insbesondere Getreide-Clustern
Procédé et appareil pour la fabrication d'agglomérats alimentaires, en particulier de clusters de céréales

(43) Date of publication of application: 31.01.1996
(73) Proprietor: QUAKER OATS B.V., 3331 LR Zwijndrecht (NL)
(72) Inventor: Van Dalsem, Simon, NL - 1823 GB Alkmaar (NL); White, Ian George, GB - Middlesex HA5 5SF (GB)
(74) Representative: Ferguson, Alexander

(56) References cited:
- GB-A- 2 000 426

## Description

This invention relates to a process and an apparatus for manufacturing food products, in particular ready-to-eat cereal clusters, as described in the preambles of claims 1 and 8, respectively.

Such a process and such an apparatus are known from GB-A-2.000.426. This document discloses a process for manufacturing breakfast cereal clusters by preparing a mixture comprising particulate components and binder components and shaping the mixture into a plurality of pieces before drying. The shaping takes place by means of a rotary die moulding apparatus comprising a cavity-bearing roll which deposites the molded but not yet dried pieces upon a conveyor band onto which the pieces are conveyed towards and through an oven.

Ready-to-eat cereal clusters are especially known in the form of breakfast food. The cereal clusters, being of bite size, usually are combined with yoghurt of milk and have components which correspond to a large extent to muesli, to which the cereal clusters are a very popular alternative.

The known cereal clusters are made from grain particles with the optional addition of e.g. pieces of nut and/or pieces of dried fruit, which pieces/particles are dried and mixed with a binding agent, i.e. a syrup containing i.a. honey, minerals, flavourings and preservatives. The obtained viscous wet cereal blend is deposited in web-form on a conveyor belt provided with small vent apertures and conveyed thereby through a drying and roasting/toasting station. After being allowed to cool, the cereal blend web is passed through a reduction station, in which the web is broken or kibbled into separate cereal clusters, which are discharged to a packaging station to be packed into plastic bags and subsequently into cartons.

Since it is hard to control the breaking or kibbling process completely, many cereal clusters leaving the reduction station have dimensions that make them unsuitable for inclusion in the final product. Therefore, sieves are used for removal of clusters that are either too large or too small, in particular dust or grit resulting from the reduction process. For economical reasons, however, the mass of cereal clusters which are discharged to the packaging station, still contain clusters of a wide dimensional range. This is undesirable.

Known cereal clusters have a density of about 400 kg/m³, and are recognizable by their crispy nature and by their floating properties, by which it is avoided that at the end of the meal a pulp rests on the bottom of the bowl.
It has become apparent, however, that there is a need to further increase these properties by decreasing the density of the cereal clusters. However, this gives rise to problems in the above-mentioned size decreasing process. As a result of the brittle nature of the syrup-bound cereals the amount of waste resulting from the breaking/-kibbling would become too large to render the process economical.

It is an object of the invention to provide a process and an apparatus by which cereal clusters having a low density (e.g. lower than 200 kg/m³) can be manufactured economically.

It is a further object of the invention to provide a process and an apparatus by which fragile cereal clusters can be manufactured without the risk of an uneconomical quantity of waste.

It is still a further object of the invention to provide a process and an apparatus for manufacturing cereal clusters in a more simple way and with less effort than according to the state of the art.

To this end, the invention provides a process for manufacturing a food product, in particular ready-to-eat cereal clusters, as described in claim 1.

The finished food or cereal clusters are typically discharged to a packing station and are put into plastic bags and subsequently into cartons.

The invention further provides an apparatus for manufacturing a food product, in particular ready-to-eat cereal clusters, as described in claim 8.

Preferred embodiments of the process and of the apparatus of the invention form the subject of the enclosed claims, the text of which is to be considered as inserted here.

The invention will now be described by means of a preferred exemplary embodiment which is shown in the accompanying drawings.
Figure 1 shows a schematic view of the preferred embodiment of the apparatus of the invention; and
Figures 2A and 2B show a top view and a side view of a portion of the shaping band used in the apparatus of figure 1.

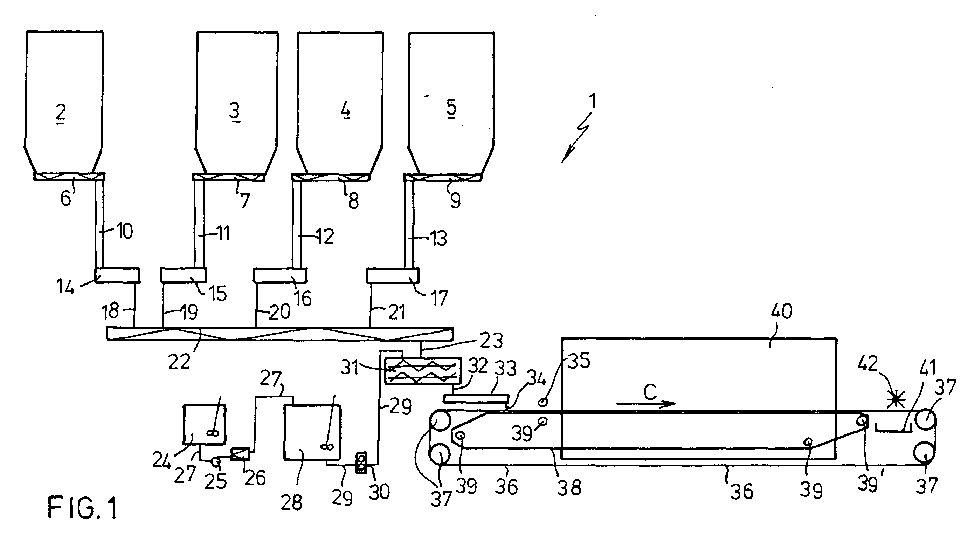

In figure 1 the apparatus 1 for manufacturing ready-to-eat cereal clusters comprises grain ingredients silos 2, 3, 4, and 5 having selectively closable discharge openings 6-9, respectively. From the discharge openings 6-9 supply lines 10-13 extend to grain ingredient weighing band feeders 14-17, respectively, which in turn deliver the metered quantities of grain by supply lines 18-21 to a collecting device 22 for dry ingredients. There may be as many dry ingredient supply lines discharging to collecting device 22 as desired for the product which is to be manufactured. It is to be understood that the term "grain ingredient" should be interpreted in a broad sense, thus including pieces of nut, dried fruit, chocolate, etc.

Through supply line 23 the collecting device 22 delivers the collected dry components to a mixer 31.

Before the dry components are stored in the silos 2-5, they have been prepared by way of continuous steam rolling, extrusion and slicing, extrusion and rolling, batch cooking and rolling, puffing, puffing and rolling, puffing and slicing/any other form of size reduction.

In the lower left-hand corner of figure 1 is depicted a syrup preparation tank 24, which supplies syrup to a syrup storage tank 28 through syrup supply line 27, pump 25 and filter 26. Syrup from tank 28 is delivered to mixer 31 through supply line 29 and metering pump 30.

In the mixer 31 a blend of multigrain cereals is batch-wise or continuously blended with binding syrup, which contains brown sugar, honey, glucose syrups, fructose syrups, malto-dextrin, milk protein, vegetable protein, salt, vitamins, minerals, flavouring and preservatives.

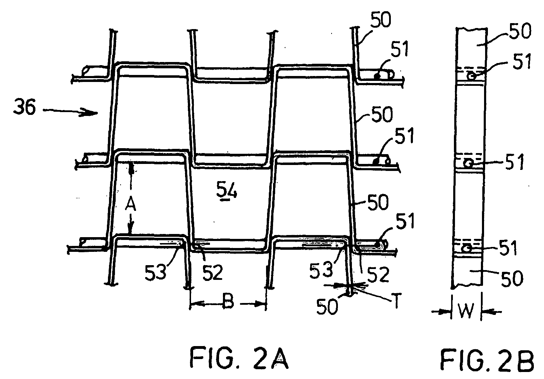

The mixer 31 discharges the syrup-dry component mixture or blend through supply line 32 to a spreader 33. Spreader 33 is arranged to deliver the blend to an open weave band 36, of which a detail is shown in figures 2A and 2B. Open weave band 36 is continuous and runs over free running support rollers 37 in the direction C, through an oven 40, including a drying station, a toasting or roasting station and a cooling station. Just upstream from that point, where the spreader 33 delivers the blend to the open weave band 36, the open weave band 36 is supported by conventional perforated oven band 38, which runs over roller 39 and is driven by roller 39¹, which in turn is driven by conventional means (not shown). The oven band 38 drives the open weave band 36 due to frictional engagement of the underside thereof.

The open weave band 36 is composed of a plurality of sheet pile like shaped strips 50, which are hingeably connected to each other by means of bars 51 inserted through holes 52-53 in subsequent strips 50, as can be seen in figures 2A, 2B, to form compartments 54. The bars 51 extend transversly to the direction of movement of the band 36 and are at their ends provided with a thread on which nuts can be releasably fastened for inhibiting transverse movement of the bars 51 relative to the strips 50 and for exchanging strips 50 with other strips for reasons of maintenance or repair or for changing the dimensions of a transverse row of compartments. The strips 50 and the bars 51 are made of stainless steel or thermo-plastic material and preferably coated with an anti-sticking material, such as teflon. In use, the strips 50 extend upwardly, "W" being the vertical dimension.

The inner dimensions of the open weave band 36 are preferably as follows: the distance "A", which is the inner horizontal dimension of the compartments 54 in the band direction, is 5.0 to 25.4 mm; the transverse distance "B", the width of the compartments 54 5.0 to 25.4 mm (Fig 2A). The thickness "T" of the strip material preferably is 1 to 2 mm, while the height "W" of the strip 50 and consequently of the compartment 54 preferably is 5.0 to 25.4 mm. In this case, the cereal clusters will have a "bite size", i.e. are ready to eat. The "open weave" band may be shaped in other ways, e.g. have a honey comb pattern, or any arrangement to achieve the desired "bite-size" shapes.

Referring again to figure 1, the viscous blend/mixture is delivered by the spreader 33 in the open weave or shaping band 36 and is supported there by the upper surface of oven band 38, while being confined laterally in the compartments 54 by strips 50. In fact, delivery of the blend to the oven band and division into individual cluster format portions is realized simultaneously.

The blend is delivered in a small excess. Initial compaction is taking place due to the blend's/mixture's own weight. The remaining excess blend, extending above the strips 50, is removed mechanically, e.g. by means of scraper 34 and/or by means of compression roll or band 35 which is held resting on or slightly above the upper edges of the strips 50.

Any further excess loose cereal is removed before the combined oven band 38 and open weave or shaping band 36 are moved into the heating zones of the drying/toasting oven 40. Inside the oven the moisture from the binding syrup is removed to desired moisture content before toasting or roasting of the cereal blend in the compartments.

After cooling the clusters of cereals are removed by allowing the "open-weave" band 36 to continue to move horizontally free from the conventional oven band 38, facilitating product release onto a take-away conveying system 41, whereby complete removal of cereal clusters from the band is guaranteed by the use of a rotary device 42 on top of the "open-weave" band 36, which rotary device 42 is equipped with "fingers" of size and shape, with close tolerance, to mirror the open areas of the band 36.

This method removes the need to break or kibble and screen a coherent layer of bonded cereals as in current processes, whereby the quality and the yield is significantly improved.

This method is particularly beneficial for low density, fragile cereal compositions, which employ extruded and puffed cereals. The density of the cereal clusters can be 200 kg/m³ or less, e.g. 150 kg/m³.

The invention is not intended to be limited to cereal clusters, but includes the manufacturing of food clusters which are used as a sweet or savoury snack, or an ice cream or dessert topping.

## Claims

1. Process for manufacturing a food product, in particular ready-to-eat cereal clusters, wherein food particles, preferably grain ingredients, and a binding agent, preferably a syrup are combined to form a mixture, the mixture is dried and preferably toasted or roasted and is discharged in the form of clusters, wherein before being dried and possibly toasted the mixture is shaped into a plurality of pieces, **chracterized by** dividing the mixture over a shaping and dosing band comprising a plurality of compartments having dimensions corresponding to the desired dimensions of the finished food preferably cereal clusters and holding the mixture during the drying process.

2. Process according to claim 1, wherein after the mixture is deposited in the compartments of the shaping band, the top of that band is passed beneath scraper means for removal of portions of the mixture extending above the top of the compartments of the shaping band.

3. Process according to claim 1 or 2, wherein after delivery to the band and prior to being dried the mixture is subjected to a vertical downwardly exerted compression force to keep the upper surface of the mixture in the compartments at or below the top of the compartments.

4. Process according to claim 1, 2 or 3, wherein the compartments of the shaping band have an open bottom and wherein during division, drying and preferably toasting or roasting of the mixture, the open bottoms are closed against downward migration of the mixture by a supporting plane.

5. Process according to claim 4, wherein the shaping band is supported by a supporting band which is being driven in the direction of process and drives the shaping band.

6. Process according to claim 5, wherein after the mixture is dried and preferably toasted or roasted the supporting band is moved away downwardly from the shaping band in order to free the bottoms of the compartments filled with the mixture to permit the contents of the compartments, having the form of food, preferably cereal clusters, to fall on a discharging means.

7. Process according to any one of the preceding claims, wherein the finished food, preferably cereal clusters are discharged to a packing station and are put into plastic bags and subsequently into cartons.

8. Apparatus (1) for manufacturing a food product, in particular ready-to-eat cereal clusters, comprising food particles, preferably grain ingredients - supplying means, binding agent-, preferably syrup supplying means, means (31) for mixing the food particles, preferably grain ingredients, and the binding agent, preferably syrup to form a mixture, drying and preferably toasting or roasting means (40) for drying and preferably toasting or roasting the mixture, discharging means (41) for discharging the dried and possibly toasted or roasted product, a first transporting means (36) for conveying the mixture through the drying and possibly toasting or roasting means and means (33) for delivering the mixture to said first transporting means, **characterized in that** said first transporting means comprises a shaping band (36) forming a series of compartments (54) for holding and laterally confining individual portions of the mixture.

9. Apparatus (1) according to claim 8, wherein the shaping band (36) is an open mesh band, having an open bottom, the apparatus further comprising a supporting means (38) for supporting said shaping band and the mixture in the compartments.

10. Apparatus (1) according to claim 9, wherein a second transporting means (38) is arranged beneath said shaping band and forms said supporting means, the apparatus further comprising drive means (39') for driving said second transporting means, said first transporting means (36) being connected with said second transporting means for being driven thereby.

11. Apparatus (1) according to claim 10, wherein said second transporting means (38) is a perforated conveyor belt.

12. Apparatus (1) according to any one of the claims 8-11, wherein the compartments (54) of the shaping band (36) have a height of 5.0 - 25.4 mm.

13. Apparatus (1) according to claim 9, wherein the upper edges of the compartments (54) are located at 5.0 - 25.4 mm above the supporting surface of said supporting means.

14. Apparatus (1) according to any one of the claims 8-13, wherein the horizontal inner dimensions of the compartments are 5.0 - 25.4 mm in the band direction and in the direction perpendicular thereto.

15. Apparatus (1) according to any one of the claims 8-14, further comprising means for adjusting the dimensions of the compartments.

16. Apparatus (1) according to claim 15, wherein the adjusting means are selectively operable for enabling adjustment of the dimension of selected groups of compartments (54).

17. Apparatus (1) according to any one of the claims 8-16, wherein the delivery means (33) comprise scraper means (34).

18. Apparatus (1) according to any one of the claims 8-17, further comprising compression means (35) arranged between the delivery means and the drying and, if present, toasting or roasting means for acting on the top surface of the mixture in the shaping band.

19. Apparatus (1) according to any one of the claims 8-18, wherein in a downstreams direction the shaping band (36) extends beyond the second transporting means (38) and above said discharge means (33), said discharge means comprising a third transporting means (41) arranged for intercepting the dried and possibly toasted or roasted mixture portions having the form of clusters falling down out of the compartments and for transporting them to a packaging station.

20. Apparatus (1) according to claim 19, further comprising means (42) for pushing said mixture portions down out of the compartments to assist them in falling out of the compartments and onto said third transporting means.

## Patentansprüche

1. Verfahren zur Herstellung eines Lebensmittelprodukts, insbesondere von eßbereiten Getreide-Clustern, worin Lebensmittelzutaten, vorzugsweise Kornbestandteile, und ein bindender Wirkstoff, vorzugsweise ein Sirup, kombiniert sind um eine Mischung zu formen, wobei die Mischung getrocknet und vorzugsweise getoastet oder geröstet wird und in der Form von Clustern abgeführt wird, wobei die Mischung in einer Mehrheit von Stücken geformt wird, bevor getrocknet und möglicherweise getoastet zu werden, **dadurch gekennzeichnet**, daß die Mischung über ein Form- und Dosierband verteilt wird, das eine Mehrheit von Fächern mit Abmessungen, übereinstimmend mit den Abmessungen der Fertiglebensmittel, vorzugsweise Getreide-Cluster, umfaßt und das die Mischung während des Trockenprozesses behält.

2. Verfahren gemäß Anspruch 1, wobei nachdem die Mischung in den Fächern des Formbandes abgelegt worden ist, das Oberteil dieses Bandes unter Schabermittel durchgeführt wird, um Portionen der Mischung die über der Oberseite der Fächer des Formbandes ausstecken, zu entfernen.

3. Verfahren gemäß Anspruch 1 oder 2, wobei nach Abgabe an das Band und bevor getrocknet zu werden, die Mischung einer vertikal abwärts ausgeübten Druckkraft unterworfen wird, um die oberste Oberfläche der Mischung in den Fächern auf oder unter der Oberseite des Faches zu behalten.

4. Verfahren gemäß Anspruch 1, 2 oder 3, wobei die Fächer des Formbandes einen offenen Boden haben, und worin während der Verteilung, dem Trocknen und vorzugsweise dem Toasten oder Rösten der Mischung, die offenen Boden durch eine Tragfläche gegen abwärtse Bewegung der Mischung geschlossen werden.

5. Verfahren gemäß Anspruch 4, wobei das Formband durch ein Stützband, das in die Richtung des Verfahrens getrieben wird und das Formband antreibt, gestützt wird.

6. Verfahren gemäß Anspruch 5, wobei nachdem die Mischung getrocknet und vorzugsweise getoastet oder geröstet ist, das Stützband abwärts von dem Formband bewogen wird, um die Boden der mit der Mischung gefüllten Fächer zu befreien um die Inhälte der Fächer, in der Form von Lebensmitteln, vorzugsweise Getreide-Clustern, auf einem Abfuhrmittel fallen zu lassen.

7. Verfahren gemäß einem der vorhergehenden Ansprüche, wobei die Fertiglebensmittel, vorzugsweise Getreide-Cluster, zu einem Verpackungsplatz abgeführt werden und in Plastiksäcke und nachher in Schachtel gepackt werden.

8. Vorrichtung (1) um ein Lebensmittelprodukt herzustellen, insbesondere eßfertige Getreide-Cluster, umfassend Zufuhrmittel für Lebensmittelzutaten, vorzugsweise Kornbestandteile - Zufuhrmittel für bindenden Wirkstoff - vorzugsweise Sirup, Mittel (31), um die Lebensmittelzutaten, vorzugsweise Kornbestandteile, und den bindenden Wirkstoff, vorzugsweise Sirup, zu mischen, um eine Mischung zu formen, Trocken- und vorzugsweise Toast- oder Röstmittel (40) um die Mischung zu trocknen, toasten oder rösten, Abfuhrmittel (41) um das getrockene und möglich getoastete oder geröstete Produkt abzuführen, ein erstes Transportmittel (36) um die Mischung durch die Trocken- und möglich Toast- oder Röstmittel zu fördern und Mittel (33) um die Mischung an das erste Transportmittel abzuliefern, **dadurch gekennzeichnet**, daß das erste Transportmittel ein Formband (36) umfaßt das eine Reihe von Fächern (54) formt um individuelle Mengen der Mischung zu behalten und seitlich zu beschränken.

9. Vorrichtung (1) gemäß Anspruch 8, wobei das Formband (36) ein offenes Mascheband ist, mit einem offenen Boden, wobei die Vorrichtung weiter Stützmittel (38) umfaßt um das Formband und die Mischung in den Fächern zu stützen.

10. Vorrichtung (1) gemäß Anspruch 9, wobei ein zweites das Stützmittel formende Transportmittel (38) unter dem Formband angeordnet ist, wobei die Vorrichtung weiter umfaßt Treibmittel (39') um das zweite Transportmittel anzutreiben, wobei das erste Transportmittel (36) mit dem zweiten Transportmittel verbunden ist, um dadurch angetrieben zu werden.

11. Vorrichtung (1) gemäß Anspruch 10, wobei das zweite Transportmittel (38) ein perforiertes Transportband ist.

12. Vorrichtung (1) gemäß einem der Ansprüche 8-11, wobei die Fächer (54) des Formbandes (36) eine Höhe von 5.0 - 25.4 mm haben.

13. Vorrichtung (1) gemäß Anspruch 9, wobei die Oberkanten der Fächer (54) auf 5.0 - 25.4 mm über der Stützoberfläche des Stützmittels gelegen sind.

14. Vorrichtung (1) gemäß einem der Ansprüche 8-13, wobei die horizontale Innenabmessungen der Fächer in der Bandrichtung und in der senkrecht darauf stehenden Richtung 5.0 - 25.4 mm sind.

15. Vorrichtung (1) gemäß einem der Ansprüche 8-14, weiter umfassend Mittel um die Abmessungen der Fächer anzupassen.

16. Vorrichtung (1) gemäß Anspruch 15, wobei die Anpassungsmittel selektiv betriebsfähig sind, um die Abmessung von selektiven Fächergruppen (54) anpassen zu können.

17. Vorrichtung (1) gemäß einem der Ansprüche 8-16, wobei die Lieferungsmittel (33) Schabermittel (34) umfassen.

18. Vorrichtung (1) gemäß einem der Ansprüche 8-17, weiter umfassend Druckmittel (35), zwischen den Liefermitteln und den Trocken- und, wenn anwesend, Toast- oder Röstmitteln angeordnet, um auf die Oberseite der Mischung in dem Formband zu wirken.

19. Vorrichtung (1) gemäß einem der Ansprüche 8-18, wobei in eine abwärtse Richtung das Formband (36) sich an dem zweiten Transportmittel (38) vorbei und über das Abfuhrmittel (33) erstreckt, wobei das Abfuhrmittel ein drittes Transportmittel (41) umfaßt, um die getrockenen und möglicherweise getoasteten oder gerösteten aus den Fächern fallenden Mischungsportionen in der Form von Clustern abzufangen und zu einem Verpackungsplatz zu fördern.

20. Vorrichtung (1) gemäß Anspruch 19, weiter umfassend Mittel (42) um die Mischungsportionen unten aus den Fächern zu drücken und um diesen zu helfen aus den Fächern auf dem dritten Transportmittel zu fallen.

## Revendications

1. Procédé de fabrication d'un produit alimentaire, en particulier d'agglomérats de céréales prêts à manger, dans lequel des particules alimentaires, de préférence des ingrédients en grain et un agent agglomérant, de préférence un sirop, sont combinés pour former un mélange, le mélange est séché et de préférence grillé ou rôti, et est déversé sous la forme d'agglomérats, dans lequel avant d'être séché et de manière possible grillé, le mélange est formé en une pluralité de pièces, caractérisé en ce que le mélange est divisé sur une bande de mise en forme et de dosage comportant une pluralité de compartiments ayant des dimensions correspondant aux dimensions voulues de l'aliment fini, de préférence des agglomérats de céréales, et supportant le mélange lors du traitement de séchage.

2. Procédé selon la revendication 1, dans lequel après que le mélange ait été déposé dans les compartiments de la bande de mise en forme, la partie supérieure de cette bande est passée sous des moyens formant racloir pour enlever des parties du mélange s'étendant au-dessus de la partie supérieure des compartiments de la bande de mise en forme.

3. Procédé selon la revendication 1 ou 2, dans lequel après le déversement sur la bande et avant d'être séché, le mélange est soumis à une force de compression verticale exercée vers le bas afin de maintenir la surface supérieure du mélange situé dans les compartiments au niveau de la partie supérieure des compartiments ou au-dessous de celle-ci.

4. Procédé selon l'une quelconque des revendications précédentes, dans lequel les compartiments de la bande de mise en forme ont un fond ouvert et dans lequel lors de la division, du séchage et de préférence du grillage ou du rôtissage du mélange, les fonds ouverts sont fermés, à l'encontre d'une migration du mélange vers le bas, par un plan de support.

5. Procédé selon la revendication 4, dans lequel la bande de mise en forme est supportée par une bande de support qui est entraînée dans la direction du traitement et entraîne la bande de mise en forme.

6. Procédé selon la revendication 5, dans lequel après que le mélange ait été séché et de préférence grillé ou rôti, la bande de support est éloignée vers le bas à partir de la bande de mise en forme afin de libérer les fonds des compartiments remplis du mélange pour permettre au contenu des compartiments, ayant la forme d'un aliment, de préférence d'agglomérats de céréales, de tomber sur des moyens d'évacuation.

7. Procédé selon l'une quelconque des revendications précédentes, dans lequel l'aliment fini, de préférence des agglomérats de céréales, est évacué jusqu'à un poste d'emballage et est mis dans des sachets plastiques, et ensuite dans des cartons.

8. Dispositif (1) de fabrication d'un produit alimentaire, en particulier d'agglomérats de céréales prêts à manger, comportant des moyens d'acheminement des particules d'aliment, de préférence des ingrédients en grain, des moyens d'acheminement d'un agent agglomérant, de préférence du sirop, des moyens (31) pour mélanger les particules alimentaires, de préférence des ingrédients en grain, et l'agent agglomérant, de préférence du sirop afin de former un mélange, des moyens de séchage et de préférence de grillage ou rôtissage (40) pour sécher et de préférence griller ou rôtir le mélange, des moyens d'évacuation (41) pour évacuer le produit séché éventuellement grillé ou rôti, des premiers moyens de transport (36) pour transporter le mélange à travers les moyens de séchage et éventuellement de grillage ou de rôtissage, et des moyens (33) pour délivrer le mélange auxdits premiers moyens de transport, caractérisé en ce que lesdits premiers moyens de transport comportent une bande de mise en forme (36) formant une série de compartiments (54) destinés à supporter et à confiner latéralement des portions individuelles du mélange.

9. Dispositif (1) selon la revendication 8, dans lequel la bande de mise en forme est une bande à mailles ouvertes, ayant un fond ouvert, le dispositif comportant de plus des moyens de support (38) destinés à supporter ladite bande de mise en forme et le mélange dans les compartiments.

10. Dispositif (1) selon la revendication 9, dans lequel des deuxièmes moyens de transport (38) sont agencés sous ladite bande de mise en forme, et forment lesdits moyens de support, le dispositif comportant de plus des moyens d'entraînement (39') pour entraîner lesdits deuxièmes moyens de transport, lesdits premiers moyens de transport (36) étant connectés auxdits deuxièmes moyens de transport pour être entraînés par ceux-ci.

11. Dispositif (1) selon la revendication 10, dans lequel lesdits deuxièmes moyens de transport (38) sont constitués d'une courroie de convoyeur perforée.

12. Dispositif (1) selon l'une quelconque des revendications 8 à 11, dans lequel les compartiments (54) de la bande de mise en forme (36) ont une hauteur de 5,0 à 25,4 mm.

13. Dispositif (1) selon la revendication 9, dans lequel les bords supérieurs des compartiments (54) sont positionnés de 5,0 à 25,4 mm au-dessus de la surface de support desdits moyens de support.

14. Dispositif (1) selon l'une quelconque des revendications 8 à 13, dans lequel les dimensions intérieures horizontales des compartiments sont de 5,0 à 25,4 mm dans la direction de bande, et dans la direction perpendiculaire à celle-ci.

15. Dispositif (1) selon l'une quelconque des revendications 8 à 14, comportant de plus des moyens pour ajuster les dimensions des compartiments.

16. Dispositif (1) selon la revendication 15, dans lequel les moyens d'ajustement peuvent être actionnés de manière sélective pour permettre l'ajustement de la dimension de groupes de compartiments (54) sélectionnés.

17. Dispositif (1) selon l'une quelconque des revendications 8 à 16, dans lequel les moyens pour délivrer (33) comportent des moyens formant racloir (34).

18. Dispositif (1) selon l'une quelconque des revendications 8 à 17, comportant de plus des moyens de compression (35) agencés entre les moyens pour délivrer et les moyens de séchage et, s'il y en a, de grillage ou de rôtissage pour agir sur la surface supérieure du mélange situé dans la bande de mise en forme.

19. Dispositif (1) selon l'une quelconque des revendications 8 à 18, dans lequel dans une direction vers l'aval, la bande de mise en forme (36) s'étend au-delà des deuxièmes moyens de transport (38) et au-dessus desdits moyens d'évacuation (33), lesdits moyens d'évacuation comportant des troisièmes moyens de transport (41) agencés pour intercepter les portions de mélange séchées et éventuellement grillées ou rôties ayant la forme d'agglomérats tombant vers le bas à l'extérieur des compartiments et pour les transporter jusqu'à un poste d'emballage.

20. Dispositif (1) selon la revendication 19, comportant de plus des moyens (42) pour pousser lesdites portions de mélange vers le bas à l'extérieur des compartiments pour les aider à tomber à l'extérieur des compartiments et sur lesdits troisièmes moyens de transport.
